# EUROPEAN PATENT SPECIFICATION

(11) **EP 3 656 696 B1**
(45) Date of publication and mention of the grant of the patent: **09.08.2023**
(21) Application number: 18207401.3
(22) Date of filing: 20.11.2018
(51) Int. Cl.: B65D 63/10, F16B 37/08, F16L 3/233, B29C 45/26, B29L 31/00, B29C 45/00

(54) **CABLE TIE, METHOD OF PRODUCING A CABLE TIE, AND CABLE TIE INJECTION MOLDING TOOL**
KABELBINDER, VERFAHREN ZUR HERSTELLUNG EINES KABELBINDERS UND KABELBINDERSPRITZGIESSWERKZEUG
ATTACHE DE CÂBLE, PROCÉDÉ DE PRODUCTION D'ATTACHE DE CÂBLE ET OUTIL DE MOULAGE PAR INJECTION D'ATTACHE DE CÂBLE

(43) Date of publication of application: 27.05.2020
(73) Proprietor: HellermannTyton GmbH, 25436 Tornesch (DE)
(72) Inventor: MASCHMANN, Sven, 22589 Hamburg (DE)
(74) Representative: Manitz Finsterwald Patent- und Rechtsanwaltspartnerschaft mbB

(56) References cited:
- EP-A1- 0 751 597
- EP-A2- 1 260 452
- WO-A1-98/22740
- CN-U- 203 779 758
- DE-U1- 8 525 508
- FR-A1- 2 607 201
- GB-A- 2 155 534
- GB-A- 2 421 276
- US-A1- 2008 244 874
- US-A1- 2010 236 030
- US-A1- 2016 223 100

## Description

The present invention relates to a cable tie comprising a head and a strap, wherein the head is configured to be coupled to a section of the strap when a rear end of the strap is guided through the head, wherein the head further comprises a reception space configured to receive a bolt element. The invention further relates to a method of producing a cable tie and to a cable tie injection molding tool.

GB 2 421 276 A, US 2016/223100 A1, EP 1 260 452 A2, US 2010/236030 and CN 203 779 758 U disclose cable ties wherein a front end of a strap is attached to a head via a curved section in the uncoupled state of the cable tie. EP 1 260 452 A2, US 2010/236030 and CN 203 779 758 U also disclose the parting line layouts of injection moulds for cable ties with curved sections. DE 85 25 508 U1, WO 98/22740 A1, US 2008/244874 A1 and EP 0 751 597 A1 disclose cable ties wherein reception spaces for studs are provided. GB 2 155 534 A and FR 2 607 201 A1 disclose configurations of reception spaces for studs.

Cable ties for use with bolt elements are known that comprise a reception space e.g. with internal undercuts for coupling to a weld stud. Such cable ties require the strap of the cable tie to not project beyond the side of the head comprising the opening to the reception space, so that the strap does not interfere with the attachment of the bolt element to the cable tie. In order to form such cable ties comparatively complex injection molded tools are typically required, which comprises two inserts and several sliders that interact with the inserts to form the various shapes within the head of the cable tie. The inserts and sliders have to be configured in such a way that they are inserted and removed in a time consuming manner to and from the mold. The use of complex molds increases the cost of production of the cable ties and typically leads to a greater number of rejects. For this reason it is an object of the invention to make available a cable tie that can be produced in a more facile, cost effective manner with a reduced amount of rejects in comparison to the prior art. It is a further object of the present invention to enhance the connection between the bolt element and the cable tie. It is yet a further object of the invention to make available a more versatile cable tie that can be used with a plethora of different lengths of bolt elements having the same diameter.

This object is satisfied by a cable tie having the features of claim 1.

Such a cable tie comprises a head and a strap, wherein the head is configured to be coupled to a section of the strap when a rear end of the strap is guided through the head, wherein the head further comprises a reception space configured to receive a bolt element, wherein a front end of the strap is attached to a base of the head via a curved section in the uncoupled state of the cable tie, with the strap extending in parallel to a depth of the reception space in said uncoupled state,wherein the head comprises a pawl to couple the head to the section of the strap, when the rear end of the strap is guided through the head, and wherein the pawl is disposed on the side of the head remote from the base, with the reception space being formed between the pawl and the base.

By forming the head such that the strap extends from the head via a curved section reduces the number of sliders that have to be employed in an injection molding tool to form the cable tie reducing the cost and complexity of the injection folded tool. Depending on the design this leads to only two inserts and no sliders being required and hence an overall reduction in the height and complexity of the mold which enables a cheaper and more reliable mold to be used. Thereby a cable tie is made available that can be produced in a more facile, cost effective manner with a reduced amount of rejects in comparison to the prior art.

The curved section provides the strap with a deformation at the surface of the cable tie that comes into contact e.g. with a sheet metal part at which the bolt element is attached. On attaching the cable tie to the bolt element the strap is guided away from the sheet metal part, but still projects, at least slightly, beyond the base in the direction of the sheet metal part and through this projection forms a bias that aids in the attachment of the cable tie to the sheet metal part and hence enhances the connection between the bolt element and the cable tie.

Further benefits and advantageous embodiments of the invention will become apparent from the dependent claims, from the description and from the accompanying drawings.

The curved section may project from a front side of the head at the base, with the curved section initially projecting such that a first part of the curved section is in parallel to a front face of the base. Such a cable tie can be formed in an expedient manner in an injection molded tool that comprises less and preferably no sliders. This is in stark contrast to what was previously the case for a cable tie with a bolt reception space.

The curved section may gradually deflect the strap by an angle selected in the range of 70 to 110°, preferably of 80 to 100°, especially of 85 to 95°, with respect to the front face of the base, in particular wherein the curved section is formed by a curved arc that deflects the strap by 90° or at least substantially 90° with respect to a front face of the base.

Such curved sections have been found to be beneficial firstly with respect to a simplified injection molded tool and secondly - and just as important - it has been found that the fact that the strap projects beyond the base which was previously avoided at all cost also enhances the reliability of the connection between the cable tie and a surface to which it is to be connected via a corresponding bolt element, as the strap produces an increase in bias between the cable tie and the surface to which it is to be attached and hence enhances a bias between the cable tie and said surface.

The curved section may be formed by a curved arc having a radius of curvature selected in the range of 1 to 8 mm, in particular of 1.5 to 5 mm. Such radii have found to be formable in an expedient and cost effective manner.

A width of the curved section may increase between the front end of the strap and the base. In this way a connection between the strap and the head can be enhanced leading to more durable cable ties.

A height of the strap is the same or substantially the same between the front end and the rear end of the strap, with a height of the curved section being the same as the height of the strap directly at the front end, with the height of the curved section either varying between the front end of the strap and the base or remaining the same or at least substantially the same over a length of the curved section. A cable tie formed in one of these ways has an improved connection of the strap at the head and hence leads to a more durable cable tie.

The head may comprise a pawl to couple the head to the section of the strap, when the rear end of the strap is guided through the head. The pawl cooperates with teeth present on the strap in a manner known per se to couple the head to the strap.

The pawl may be disposed on the side of the head remote from the base, with the reception space being formed between the pawl and the base. In this way a length of the reception space can so to say define a maximum volume of components that may be connected to the head via the strap.

The inlet to the pawl may be present at the same side of the head as the curved section. It has been found that such an assembly is beneficial to the working of such a cable tie.

The base may further comprise wing portions that extend from the base, optionally with the wing portions comprising end portions that have a greater height than a height of the remainder of the wing portions. The wing portions further increase a bias present between the head and a surface to which the cable tie is attached and hence the wing portions further increase the attachment of the cable tie to the bolt element.

The reception space may further comprise at least one of lamella, webs and ribs, with the at least one of lamella, webs and ribs forming parts of an undercut in the reception space. The undercuts act as an internal thread such that the cable tie can be beneficially coupled to the bolt element using the threaded portion of the bolt element.

The head may be open at at least one side, optionally with a wall being present at one open side. Forming the cable tie open at one or more sides means the cable ties can be produced using fewer and preferably no sliders and hence in a more facile, cost effective manner with a reduced amount of rejects in comparison to the prior art.

Apertures, in particular rectangular or at least substantially rectangular apertures, may be formed at at least one of the front side or the rear side of the head, with parts of the apertures forming parts of an/the undercut. In this way the number of sliders used to form the cable tie can be further reduced leading to a less demanding injection molding tool and hence to a more cost effective method of manufacturing the cable ties.

A material of the cable tie may be a plastic, for example a thermoplastic, especially polyamide, such as PA6, PA66, polypropylene (PP), polyether ether ketone (PEEK). Polyamides have a comparatively high hardness and internal strength and are hence well suited as a material of the cable tie.

The head, the body portion and the strap may be formed in one piece from the same material, optionally in an injection molded process. Forming the cable tie in an injection molded process makes available a facile, cost effective and reliable manner of production of the cable ties.

According to a further aspect the present invention also relates to a method of producing a cable tie, the method comprising the steps of:
- providing an injection mold comprising only two inserts forming a cable tie forming space forming a negative of the cable tie, wherein the inserts comprise surfaces that form the curved section at the base of the head;
- closing the two inserts to form the cable tie forming space;- injection molding molten plastic into the cable tie forming space;
- cooling the plastic; and
- removing the formed cable tie having the curved section from the injection mold from the injection mold, by separating the two inserts.

On use of such a method the cable ties discussed in the foregoing can be produced in a facile, cost effective and reproducible manner.

According to a further aspect the present invention relates to a cable tie injection molding tool configured to carry out the method of producing a cable tie respectively to produce a cable tie, the cable tie injection molding tool comprising only two inserts forming a cable tie forming space forming a negative of the cable tie, wherein the inserts comprise surfaces that form the curved section at the base of the head of the cable tie.

In this way the beneficial cable ties discussed in the foregoing can be produced. Moreover, due to the design of the cable tie such a mold is significantly less complex and hence less demanding in effort and cost as prior art molds which require the use of sliders in order to form the cable tie per se and in particular the strap at the head of the cable tie.

Such an injection molding tool may further comprise temperature and pressure gauges, an injection nozzle, a cooling system and further components as is well known to the person skilled in the art. In a particularly beneficial design the injection molding tool only comprises two sliders and one insert to form the cable tie forming space forming the negative of the cable tie.

Further embodiments of the invention are described in the following description of the Figures. The invention will be explained in the following in detail by means of embodiments and with reference to the drawing in which is shown:
- Fig. 1: a perspective schematic view of a first cable tie;
- Fig. 2: a more detailed schematic view of a head of the cable tie of Fig. 1;
- Fig. 3a: a schematic rear view of the cable tie of Fig. 1 fixed to a bolt element;
- Fig. 3b: a schematic front view of the cable tie of Fig. 1 fixed to a bolt element;
- Fig. 4a: a photograph of a second cable tie;
- Fig. 4b: schematic front and rear views of the cable tie of Fig. 4a;
- Fig. 5a: a photograph of a front view of a third type of cable tie;
- Fig. 5b: a photograph of a rear view of the third type of cable tie; and
- Fig. 5c: a perspective view of the third type of cable tie.

In the following, the same reference numerals will be used for parts having the same or equivalent function. Any statements made having regard to the direction of a component are made relative to the position shown in the drawing and can naturally vary in the actual position of application.

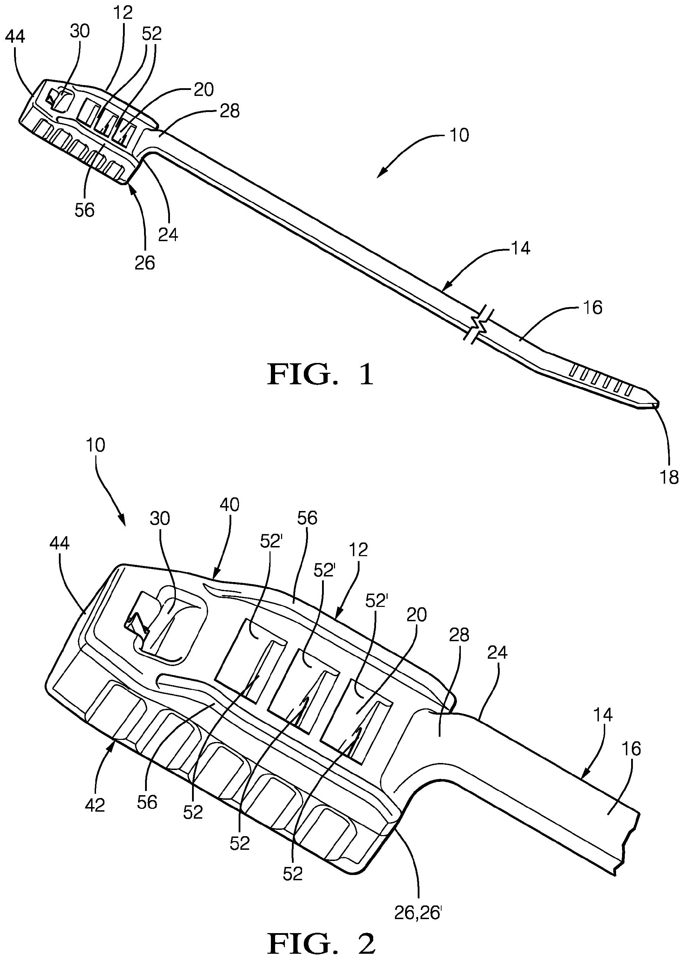

Fig. 1 shows a perspective view of a first cable tie 10. The cable tie 10 comprises a head 12 and a strap 14. The head 12 is configured to be coupled to a section 16 of the strap 14 when a rear end 18 of the strap 14 is guided through the head 12.

The head 12 further comprises a reception space 20 configured to receive a bolt element 22 (see Fig. 2a). A front end 24 of the strap 14 is attached to an front face 26' of a base 26 of the head 12 via a curved section 28 in the uncoupled state of the cable tie, with the strap 14 extending in parallel to a depth of the reception space 20.

In order to couple the strap 14 to the head 12, the head comprises a pawl 30 that can be coupled to the respective section 16 of the strap 14. The pawl 30 is arranged at a top end 44 of the head 12. The top end 44 is disposed opposite to the base 26 of the head 12.

The reception space 20 is formed between the pawl 30 and the base 26. The inlet to the pawl 30 is present at the same side of the head 12 as the curved section 28, namely at a front side 40 of the cable tie 10. On tightened the strap 14, the rear end 18 and the remaining free sections 16 of strap 14 project beyond the rear side 42 of the head 12.

A material of the strap 14 and of the curved section 28 is selected such that in the coupled state of the cable tie 10, i.e. in the state when the section 16 of the strap 14 is guided through and coupled to the pawl 30, the strap 14 is deformed at the curved section 28 in such a way that the strap 14 extends at least substantially in parallel with the base 26.

In this connection it should be noted that the pawl 30 can be configured in a manner known per se and functions in the same way as prior art pawls.

The head 12 further comprises projections 56 projecting therefrom. The projections 56 may, on the one hand, stiffen the head and, on the other hand, provide a contact surface for one or more objects (not shown) that may be coupled to the cable tie 10.

Fig. 2 shows a more detailed view of the head 12 of the cable tie 10 of Fig. 1. The curved section 28 projects from the front side 40 of the head 12 at the base 26. The curved section 28 initially projects such that a first part of the curved section is in parallel to the front face 26' of the base 26.

The curved section then gradually deflects via a curved arc by 90° or at least substantially 90°, i.e. angular deviations by up to 5° are possible until it directly adjoins the front end 24 of the strap 14. The strap 14 then extends between the front end 24 and the rear end 18.

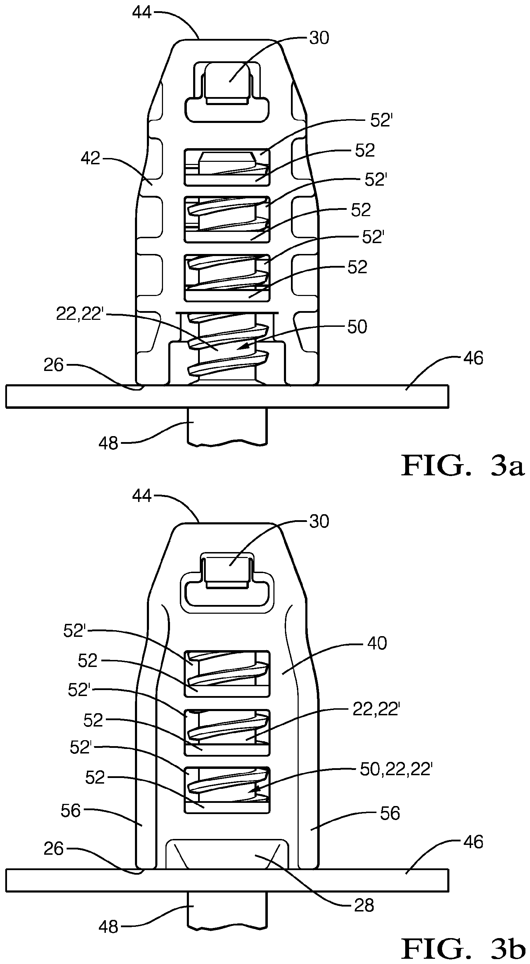

The head 12 is open at both the front and rear sides 40, 42. Apertures 52' can be seen in Figs. 2, 3a and 3b at both the front and rear sides 40, 42, with webs 52 of the apertures 52' forming parts of an undercut with which a threaded portion of the bolt element 22 can cooperate. Figs. 3a and 3b show the bolt element 22 in the form of a weld stud 22'. In this connection it should be noted that the apertures shown in Figs. 2, 3a and 3b have a rectangular shape. Also other shapes of apertures can naturally be employed.

Fig. 3a shows a view of the rear side 42 of the cable tie 10 of Fig. 1 fixed to a sheet metal part 46 via the weld stud 22', and Fig. 3b shows a view of the front side 40 of the cable tie 10 of Fig. 3a. A head part 48 of the bolt element 22 is permanently fixed to the sheet metal part 46, whereas the shank 50 having the external thread is received in the reception space.

In the example of Figs. 3a and 3b a T5 weld stud 22' having a length of 14 mm is shown. It has been found that also weld studs having a length of 7, 8 and 9 mm can still be reliably coupled to the cable tie 10. It should further be noted that the cable tie 10 can be configured to be used with weld studs 22' of various size, e.g. weld studs having a size of M2, M3, M4, M5, M6, M7, M8, M9, M10, M12, T2, T3, T4, T5, T6, T7, T8, T9, T10, T12 can generally be coupled to the cable ties 10 presented herein.

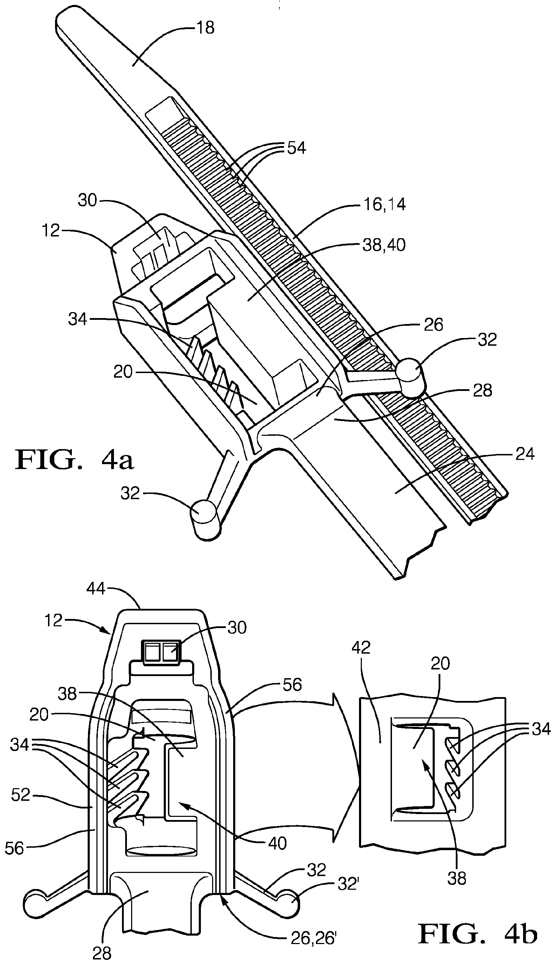

Fig. 4a shows a photograph of a second cable tie 10. The cable tie 10 comprises wing portions 32 that extend from the base 26. The wing portions 32 comprise end portions 32' that have a greater height than a height of the remainder of the wing portions 32. The end portions 32' are generally cylindrical in shape whereas the wing portions 32 themselves are planar in shape. The wing portions 32 are provided to enhance the connection between the cable tie 10 and the sheet metal part 46 to which they are attached via the bolt element 22 by increasing a bias present between the connection.

Also indicated in Fig. 4a are teeth 54 present at the strap 14. The teeth 54 cooperate with the pawl 30 in order to couple the strap 14 to the head 12.

Four Lamella 34 project into the reception space 20 and, like the webs 52 of Figs. 3a and 3b, form part of an undercut that can cooperate with the external thread of the bolt element 22.

As indicated in Fig. 4b also three lamely 34 may be provided, it has namely been found that three lamella 34 function as well as four lamella e.g. for bolt elements 22 having a length of 7, 9 or 15 mm. Moreover, a wall 38 is present at the front side 40. This wall 38 prevents the bolt element 22 from disengaging from the lamella 34 and hence the cable tie 10 from becoming loose at the bolt element 22.

Also indicated in the top right of Fig. 3b is a view of the rear side 42. No structures are present at the side of the wall 38 facing the reception space 20. This simplifies the corresponding injection molding tool.

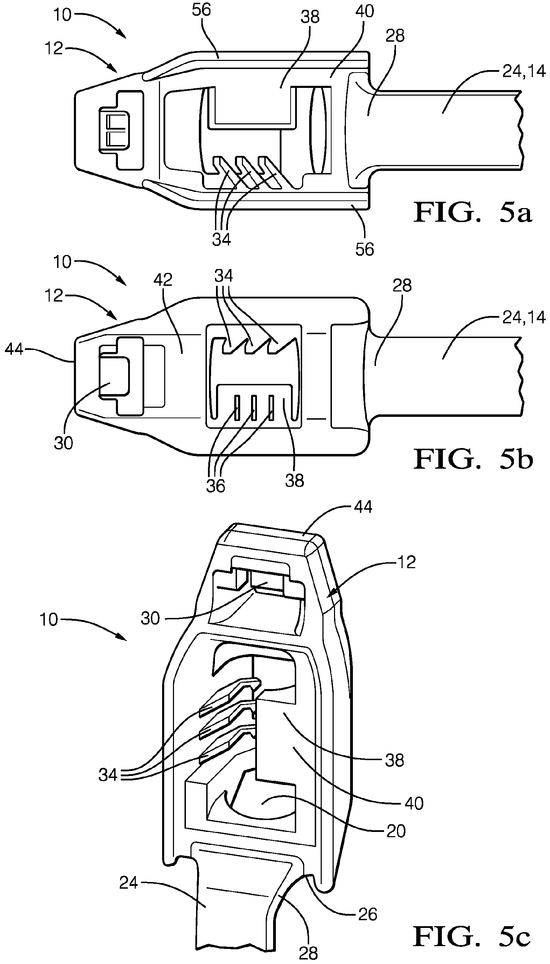

Fig. 5a shows a photograph of a front view of a third type of cable tie 10. The face of the wall 38 disposed opposite the reception space 20 may comprise a designation indicating the size of the cable tie 10. The internal design of the reception space 20 of the cable tie 10 shown in Fig. 5a is similar to that of Fig. 4a.

Fig. 5b shows a photograph of a rear view of the third type of cable tie 10. The two main differences to the design shown in Fig. 4a are that the cable tie 10 does not comprise wing portions 32. Moreover, the face of the wall 38 facing the reception space comprises ribs 36 that act as a further part of an undercut of the reception space for the attachment of the bolt element 22.

Fig. 5c shows a perspective view of the third type of cable tie 10. As also indicated in the further Figs. 1 to 5b, the curved section 28 projects from the front side 40 of the head 12 at the base 26, with the curved section 28 initially projecting such that a first part of the curved section 28 is in parallel to a front face 26' of the base 26.

The curved section 28 then gradually deflects the strap 14 by an angle of 90° or at least substantially 90° (this means with deviations of up to 5° being possible) with respect to the front face 26' of the base 26, so that the strap 14 extends perpendicular to or at least substantially perpendicular to the front face 26'.

In this connection it should be noted that the angle may be selected in the range of 70 to 110°, preferably of 80 to 100°, especially of 85 to 95°, with respect to the front face 26' of the base 26.

The curved section 28 may be formed by a curved arc that deflects the strap 14 with respect to the front face 26' of the base 26. The curved arc may have a radius of curvature selected in the range of 1 to 8 mm, in particular of 1.5 to 5 mm, depending on the size of the cable tie 10. In the present instance a radius of 2.1 mm is shown.

A width of the curved section 28 increases between the front end 24 of the strap 14 and the base 26, i.e. a width of the curved section 28 at the head 12 is greater than a width of the strap 14.

A height of the strap 14 is the same or substantially the same between the front end 24 and the rear end 18 of the strap 14, i.e. in the region of the teeth 54, with a height of the curved section 28 being the same as the height of the strap 14 directly at the front end 24, with the height of the curved section 28 remaining the same or at least substantially the same over a length of the curved section 28.

In this connection it should be noted that a height of the curved section may also vary between the front end 24 of the strap 14 and the base 26.

The lamella 34, webs 52 and ribs 36 which are respectively provided, all form parts of an undercut in the reception space 20 that is configured to couple the bolt element 22 to the cable tie 10.

A material of the cable ties discussed in the foregoing may be a plastic, for example a thermoplastic, especially polyamide, such as PA6, PA66,polypropylene (PP), polyether ether ketone (PEEK). Such plastics can be produced in a facile manner in an injection mold in one piece from the same material.

The cable ties 10 mentioned in the foregoing can be produced in an injection mold (not shown). The injection mold inter alia comprises only two inserts and no sliders forming a cable tie forming space forming a negative of the cable tie 10. The injection mold comprises surfaces that are configured to form the curved section 28 at the base 26 of the head 12, so that on injecting molten plastic into the cable tie forming space, the plastic can subsequently solidify while cooling to form the cable tie 10. The cable tie 10 is subsequently removed, with the formed cable tie 10 having the curved section 28.

### List of reference numerals:

- 10: cable tie
- 12: head
- 14: strap
- 16: section of the strap
- 18: rear end of the strap
- 20: reception space
- 22, 22': bolt element, weld stud
- 24: front end of the strap
- 26, 26': base, front face of base
- 28: curved section
- 30: pawl
- 32, 32': wing portions, end of 32
- 34: lamella
- 36: ribs
- 38: wall
- 40: front side of head
- 42: rear side of head
- 44: top end of head
- 46: sheet metal part
- 48: head part of bolt
- 50: shank of bolt
- 52, 52': web of head, aperture
- 54: teeth
- 56: projection

## Claims

1. A cable tie (10) comprising a head (12) and a strap (14), wherein the head (12) is configured to be coupled to a section (16) of the strap (14) when a rear end (18) of the strap (14) is guided through the head (12), wherein the head (12) further comprises a reception space (20) configured to receive a bolt element (22), wherein a front end (24) of the strap (14) is attached to a base (26) of the head (12) via a curved section (28) in the uncoupled state of the cable tie (10), with the strap (14) extending in parallel to a depth of the reception space (20) in said uncoupled state,
wherein the head (12) comprises a pawl (30) to couple the head (12) to the section (16) of the strap (14), when the rear end (18) of the strap (14) is guided through the head (12), and wherein the pawl is disposed on the side of the head (12) remote from the base (26), with the reception space (20) being formed between the pawl (30) and the base (26).

2. A cable tie (10) according to claim 1,
wherein an inlet of the pawl (30) is present at the same side of the head (12) as the curved section (28).

3. A cable tie (10) according to claim 1 or claim 2, wherein the curved section (28) projects from a front side (40) of the head (12) at the base (26), with the curved section (28) initially projecting such that a first part of the curved section (28) is in parallel to a front face (26') of the base (26).

4. A cable tie (10) according to at least one of the preceding claims, wherein the curved section (28) gradually deflects the strap (14) by an angle selected in the range of 70 to 110°, preferably of 80 to 100°, especially of 85 to 95°, with respect to a/the front face (26') of the base (26), in particular wherein the curved section (28) is formed by a curved arc that deflects the strap (14) by 90° or at least substantially 90° with respect to a front face (26') of the base (26).

5. A cable tie (10) according to at least one of the preceding claims, wherein the curved section (28) is formed by a curved arc having a radius of curvature selected in the range of1 to 8 mm, in particular of 1.5 t 0 5 mm.

6. A cable tie (10) according to at least one of the preceding claims, wherein a width of the curved section (28) increases between the front end (24) of the strap (14) and the base (26).

7. A cable tie (10) according to at least one of the preceding claims, wherein a height of the strap (14) is the same or substantially the same between the front end (24) and the rear end (18) of the strap (14), with a height of the curved section (28) being the same as the height of the strap (14) directly at the front end (24), with the height of the curved section (28) either varying between the front end (24) of the strap (14) and the base (26) or remaining the same or at least substantially the same over a length of the curved section (28).

8. A cable tie (10) according to at least one of the preceding claims, wherein the inlet to the pawl (30) is present at the same side of the head (12) as the curved section (28); and/or wherein the inlet to the pawl is arranged at an angle selected in the range of 70 to 110°, preferably of 80 to 100°, especially of 85 to 95°, most especially of 90° or at least substantially 90°with respect to a/the depth of the reception space (20).

9. A cable tie (10) according to at least one of the preceding claims, wherein the base (26) further comprises wing portions (32), such as lamella, that extend from the base (26), optionally with the wing portions (32) comprising end portions (32') that have a greater height than a height of the remainder of the wing portions (32).

10. A cable tie (10) according to at least one of the preceding claims, wherein the reception space (20) further comprises at least one of lamella (34), webs (52) and ribs (36), with the at least one of lamella (34), webs (52) and ribs (36) forming parts of undercuts present in the reception space (20).

11. A cable tie (10) according to at least one of the preceding claims, wherein the head (12) is open at at least one side (40, 42), optionally with a wall (38) being present at one open side (40).

12. A cable tie (10) according to at least one of the preceding claims, wherein apertures (52'), in particular rectangular or at least substantially rectangular apertures (52'), are formed at at least one of the front side (40) or the rear side (42) of the head (12), with parts of the apertures (52') forming parts of an/the undercut.

13. A cable tie (10) according to at least one of the preceding claims, wherein a material of the cable tie (10) is a plastic, for example a thermoplastic, especially polyamide, such as PA6, PA66, polypropylene (PP), polyether ether ketone (PEEK); and/or wherein the head (12), the curved section (28) and the strap (14) are formed in one piece from the same material, optionally in an injection molded process.

14. A method of producing a cable tie (10) according to at least one of the preceding claims, the method comprising the steps of:
- providing an injection mold comprising only two inserts forming a cable tie forming space forming a negative of the cable tie (10), wherein the inserts comprise surfaces that form the curved section (28) at the base (26) of the head (12);
- closing the two inserts to form the cable tie forming space;
- injection molding molten plastic into the cable tie forming space;
- cooling the plastic; and
- removing the formed cable tie (10) having the curved section (28) from the injection mold, by separating the two inserts.

15. A cable tie injection molding tool configured to carry out the method of producing a cable tie (10) according to claim 14 and/or to produce a cable tie (10) according to at least one of the claims 1 to 13, the cable tie injection molding tool comprising only two inserts forming a cable tie forming space forming a negative of the cable tie (10), wherein the inserts comprise surfaces that form the curved section (28) at the base (26) of the head (12) of the cable tie (10).

## Patentansprüche

1. Kabelbinder (10), der einen Kopf (12) und ein Band (14) aufweist, wobei der Kopf (12) so ausgebildet ist, dass er mit einem Abschnitt (16) des Bandes (14) gekoppelt wird, wenn ein rückwärtiges Ende (18) des Bandes (14) durch den Kopf (12) geführt wird, wobei der Kopf (12) ferner einen Aufnahmeraum (20) aufweist, der so ausgebildet ist, dass er ein Bolzenelement (22) aufnimmt, wobei ein vorderes Ende (24) des Bandes (14) im entkoppelten Zustand des Kabelbinders (10) über einen gekrümmten Abschnitt (28) an einer Basis (26) des Kopfes (12) befestigt ist, wobei sich das Band (14) im entkoppelten Zustand parallel zu einer Tiefe des Aufnahmeraums (20) erstreckt,
wobei der Kopf (12) eine Sperrklinke (30) aufweist, um den Kopf (12) mit dem Abschnitt (16) des Bandes (14) zu koppeln, wenn das rückwärtige Ende (18) des Bandes (14) durch den Kopf (12) geführt wird, und wobei die Sperrklinke auf der von der Basis (26) abgewandten Seite des Kopfes (12) angeordnet ist, wobei der Aufnahmeraum (20) zwischen der Sperrklinke (30) und der Basis (26) gebildet ist.

2. Kabelbinder (10) nach Anspruch 1,
wobei sich ein Einlass der Sperrklinke (30) auf derselben Seite des Kopfes (12) befindet wie der gebogene Abschnitt (28).

3. Kabelbinder (10) nach einem der Ansprüche 1 oder 2, wobei der gekrümmte Abschnitt (28) von einer Vorderseite (40) des Kopfes (12) an der Basis (26) vorsteht, wobei der gekrümmte Abschnitt (28) zunächst so vorsteht, dass ein erster Teil des gekrümmten Abschnitts (28) parallel zu einer Vorderseite (26') der Basis (26) ist.

4. Kabelbinder (10) nach einem der vorhergehenden Ansprüche, wobei der gekrümmte Abschnitt (28) das Band (14) allmählich um einen Winkel, der im Bereich von 70 bis 110°, vorzugsweise von 80 bis 100°, insbesondere von 85 bis 95°, in Bezug auf eine/die Vorderseite (26') der Basis (26) gewählt ist, ablenkt, wobei der gekrümmte Abschnitt (28) insbesondere durch einen gekrümmten Bogen gebildet ist, der das Band (14) um 90° oder zumindest im Wesentlichen um 90° in Bezug auf eine Vorderseite (26') der Basis (26) ablenkt.

5. Kabelbinder (10) nach einem der vorhergehenden Ansprüche, wobei der gekrümmte Abschnitt (28) durch einen gekrümmten Bogen mit einem Krümmungsradius gebildet ist, der im Bereich von 1 bis 8 mm, insbesondere von 1,5 bis 5 mm gewählt ist.

6. Kabelbinder (10) nach einem der vorhergehenden Ansprüche, wobei eine Breite des gekrümmten Abschnitts (28) zwischen dem vorderen Ende (24) des Bandes (14) und der Basis (26) zunimmt.

7. Kabelbinder (10) nach einem der vorhergehenden Ansprüche, wobei eine Höhe des Bandes (14) zwischen dem vorderen Ende (24) und dem rückwärtigen Ende (18) des Bandes (14) gleich oder im Wesentlichen gleich ist, wobei eine Höhe des gebogenen Abschnitts (28) gleich der Höhe des Bandes (14) direkt am vorderen Ende (24) ist, wobei die Höhe des gebogenen Abschnitts (28) entweder zwischen dem vorderen Ende (24) des Bandes (14) und der Basis (26) variiert oder über eine Länge des gebogenen Abschnitts (28) gleich oder zumindest im Wesentlichen gleich bleibt.

8. Kabelbinder (10) nach einem der vorhergehenden Ansprüche, wobei sich der Einlass zur Sperrklinke (30) auf derselben Seite des Kopfes (12) befindet wie der gebogene Abschnitt (28); und/oder wobei der Einlass zur Sperrklinke in einem Winkel im Bereich von 70 bis 110°, vorzugsweise von 80 bis 100°', insbesondere von 85 bis 95°, ganz besonders von 90° oder zumindest im Wesentlichen 90° bezogen auf eine/die Tiefe des Aufnahmeraums (20) angeordnet ist.

9. Kabelbinder (10) nach einem der vorhergehenden Ansprüche, wobei die Basis (26) ferner Flügelabschnitte (32), wie z.B. Lamellen, umfasst, die sich von der Basis (26) aus erstrecken, wobei die Flügelabschnitte (32) optional Endabschnitte (32') umfassen, die eine größere Höhe als eine Höhe der restlichen Flügelabschnitte (32) aufweisen.

10. Kabelbinder (10) nach einem der vorhergehenden Ansprüche, wobei der Aufnahmeraum (20) ferner mindestens eines von Lamellen (34), Stegen (52) und Rippen (36) aufweist, wobei das mindestens eine von Lamellen (34), Stegen (52) und Rippen (36) Teile von im Aufnahmeraum (20) vorhandenen Hinterschneidungen bilden.

11. Kabelbinder (10) nach einem der vorhergehenden Ansprüche, wobei der Kopf (12) an mindestens einer Seite (40, 42) offen ist, wobei optional eine Wand (38) an einer offenen Seite (40) vorhanden ist.

12. Kabelbinder (10) nach einem der vorhergehenden Ansprüche, wobei an mindestens einer der Vorderseite (40) oder der Rückseite (42) des Kopfes (12) Öffnungen (52'), insbesondere rechteckige oder zumindest im Wesentlichen rechteckige Öffnungen (52'), ausgebildet sind, wobei Teile der Öffnungen (52') Teile einer/der Hinterschneidung bilden.

13. Kabelbinder (10) nach einem der vorhergehenden Ansprüche, wobei ein Material des Kabelbinders (10) ein Kunststoff ist, beispielsweise ein Thermoplast, insbesondere Polyamid, wie PA6, PA66, Polypropylen (PP), Polyetheretherketon (PEEK); und/oder wobei der Kopf (12), der gebogene Abschnitt (28) und das Band (14) in einem Stück aus demselben Material optional in einem Spritzgussverfahren geformt sind.

14. Verfahren zur Herstellung eines Kabelbinders (10) nach einem der vorhergehenden Ansprüche, wobei das Verfahren die Schritte umfasst:
- Bereitstellen einer Spritzgussform, die nur zwei Einsätze umfasst, die einen Kabelbinderformungsraum bilden, der ein Negativ des Kabelbinders (10) bildet, wobei die Einsätze Oberflächen umfassen, die den gebogenen Abschnitt (28) an der Basis (26) des Kopfes (12) bilden;
- Schließen der beiden Einsätze zur Bildung des Kabelbinderformungsraums;
- Spritzgießen von geschmolzenem Kunststoff in den Kabelbinderformungsraum;
- Kühlen des Kunststoffs; und
- Entnehmen des geformten Kabelbinders (10) mit dem gekrümmten Abschnitt (28) aus der Spritzgussform, indem die beiden Einsätze getrennt werden.

15. Kabelbinder-Spritzgießwerkzeug, das so konfiguriert ist, dass es das Verfahren zur Herstellung eines Kabelbinders (10) nach Anspruch 14 durchführt und/oder einen Kabelbinder (10) gemäß einem der Ansprüche 1 bis 13 herstellt, wobei das Kabelbinder-Spritzgießwerkzeug nur zwei Einsätze umfasst, die einen Kabelbinderformungsraum bilden, der ein Negativ des Kabelbinders (10) bildet, wobei die Einsätze Oberflächen umfassen, die den gebogenen Abschnitt (28) an der Basis (26) des Kopfes (12) des Kabelbinders (10) bilden.

## Revendications

1. Attache de câble (10) comprenant une tête (12) et une bande (14), dans laquelle la tête (12) est configurée pour être accouplée à une section (16) de la bande (14) lorsqu'une extrémité arrière (18) de la bande (14) est guidée à travers la tête (12), dans laquelle la tête (12) comprend en outre un espace de réception (20) configuré pour recevoir un élément formant boulon (22), dans laquelle une extrémité avant (24) de la bande (14) est fixée à une base (26) de la tête (12) par l'intermédiaire d'une section courbe (28) dans l'état désaccouplé de l'attache de câble (10), la bande (14) s'étendant parallèlement à une profondeur de l'espace de réception (20) dans ledit état désaccouplé,
dans laquelle la tête (12) comprend un cliquet (30) pour accoupler la tête (12) à la section (16) de la bande (14) lorsque l'extrémité arrière (18) de la bande (14) est guidée à travers la tête (12), et dans laquelle le cliquet est disposé sur le côté de la tête (12) éloigné de la base (26), l'espace de réception (20) étant formé entre le cliquet (30) et la base (26).

2. Attache de câble (10) selon la revendication 1, dans laquelle une entrée du cliquet (30) est présente du même côté de la tête (12) que la section courbe (28).

3. Attache de câble (10) selon la revendication 1 ou la revendication 2, dans laquelle la section courbe (28) fait saillie depuis un côté avant (40) de la tête (12) au niveau de la base (26), la section courbe (28) faisant initialement saillie de telle sorte qu'une première partie de la section courbe (28) est parallèle à une face avant (26') de la base (26).

4. Attache de câble (10) selon au moins l'une des revendications précédentes, dans laquelle la section courbe (28) dévie progressivement la bande (14) d'un angle choisi dans la plage de 70 à 110°, de préférence de 80 à 100°, en particulier de 85 à 95°, par rapport à une/la face avant (26') de la base (26), en particulier dans laquelle la section courbe (28) est formée par un arc de cercle qui dévie la bande (14) de 90° ou au moins sensiblement de 90° par rapport à une face avant (26') de la base (26).

5. Attache de câble (10) selon au moins l'une des revendications précédentes, dans laquelle la section courbe (28) est formée par un arc de cercle ayant un rayon de courbure choisi dans la plage de 1 à 8 mm, en particulier de 1,5 à 5 mm.

6. Attache de câble (10) selon au moins l'une des revendications précédentes, dans laquelle la largeur de la section courbe (28) augmente entre l'extrémité avant (24) de la bande (14) et la base (26).

7. Attache de câble (10) selon au moins l'une des revendications précédentes, dans laquelle la hauteur de la bande (14) est identique ou sensiblement identique entre l'extrémité avant (24) et l'extrémité arrière (18) de la bande (14), la hauteur de la section courbe (28) étant identique à la hauteur de la bande (14) directement au niveau de l'extrémité avant (24), la hauteur de la section courbe (28) pouvant soit varier entre l'extrémité avant (24) de la bande (14) et la base (26), soit rester identique ou au moins sensiblement identique sur toute la longueur de la section courbe (28).

8. Attache de câble (10) selon au moins l'une des revendications précédentes, dans laquelle l'entrée du cliquet (30) est présente du même côté de la tête (12) que la section courbe (28) ; et/ou dans laquelle l'entrée du cliquet est agencée selon un angle choisi dans la plage de 70 à 110°, de préférence de 80 à 100°, en particulier de 85 à 95°, plus particulièrement de 90° ou au moins sensiblement 90° par rapport à une/la profondeur de l'espace de réception (20).

9. Attache de câble (10) selon au moins l'une des revendications précédentes, dans laquelle la base (26) comprend en outre des parties formant aile (32), telles que des lamelles, qui s'étendent à partir de la base (26), les parties formant aile (32) comprenant éventuellement des parties d'extrémité (32') qui présentent une hauteur supérieure à une hauteur du reste des parties formant aile (32).

10. Attache de câble (10) selon au moins l'une des revendications précédentes, dans laquelle l'espace de réception (20) comprend en outre au moins un élément parmi des lamelles (34), des âmes (52) et des nervures (36), ledit au moins un élément parmi des lamelles (34), des âmes (52) et des nervures (36) formant des parties de contre-dépouilles présentes dans l'espace de réception (20).

11. Attache de câble (10) selon au moins l'une des revendications précédentes, dans laquelle la tête (12) est ouverte sur au moins un côté (40, 42), une paroi (38) étant éventuellement présente sur un côté ouvert (40).

12. Attache de câble (10) selon au moins l'une des revendications précédentes, dans laquelle des ouvertures (52'), en particulier des ouvertures rectangulaires ou au moins sensiblement rectangulaires (52'), sont formées sur au moins l'un des côtés avant (40) ou arrière (42) de la tête (12), des parties des ouvertures (52') formant des parties d'une/de la contre-dépouille.

13. Attache de câble (10) selon au moins l'une des revendications précédentes, dans laquelle un matériau de l'attache de câble (10) est une matière plastique, par exemple un thermoplastique, en particulier un polyamide, tel que PA6, PA66, du polypropylène (PP), du polyéther-éther-cétone (PEEK) ; et/ou dans laquelle la tête (12), la section courbe (28) et la bande (14) sont formées d'une seule pièce à partir du même matériau, éventuellement par un procédé de moulage par injection.

14. Procédé de fabrication d'une attache de câble (10) selon au moins l'une des revendications précédentes, le procédé comprenant les étapes consistant à :
- fournir un moule d'injection comprenant seulement deux inserts formant un espace de formage d'attache de câble formant un négatif de l'attache de câble (10), dans laquelle les inserts comprennent des surfaces qui forment la section courbe (28) à la base (26) de la tête (12) ;
- fermer les deux inserts pour former l'espace de formage d'attache de câble ;
- mouler par injection du plastique fondu dans l'espace de formage d'attache de câble ;
- refroidir le plastique ; et
- retirer du moule d'injection l'attache de câble formée (10) présentant la section courbe (28), en séparant les deux inserts.

15. Outil de moulage par injection d'attache de câble configuré pour mettre en oeuvre le procédé de fabrication d'une attache de câble (10) selon la revendication 14 et/ou pour fabriquer une attache de câble (10) selon au moins l'une des revendications 1 à 13, l'outil de moulage par injection d'attache de câble ne comprenant que deux inserts formant un espace de formage d'attache de câble formant un négatif de l'attache de câble (10), les inserts comprenant des surfaces qui forment la section courbe (28) à la base (26) de la tête (12) de l'attache de câble (10).
